# EUROPEAN PATENT APPLICATION

(11) **EP 1 643 096 A1**
(43) Date of publication of application: **05.04.2006**
(21) Application number: 05016106.6
(22) Date of filing: 25.07.2005
(51) Int. Cl.: F01N 7/00

(54) **Mounting structure for air-fuel ratio sensor in motercycle**

(30) Priority: 30.09.2004 JP 2004286063
(71) Applicant: HONDA MOTOR CO., Ltd., Tokyo (JP)
(72) Inventor: Kono, Tomoya, Wako-Shi Saitama (JP); Abe, Takeru, Wako-Shi Saitama (JP); Yamazaki, Ryutaro, Wako-Shi Saitama (JP); Uraki, Mamoru, Wako-Shi Saitama (JP)
(74) Representative: Rupp, Christian

(57) **Abstract**

To provide a mounting structure of an air-fuel ratio sensor on an exhaust pipe in a motorcycle (10) wherein the concentration of oxygen in an exhaust gas can be detected by the air-fuel ratio sensor efficiently and accurately. An air-fuel ratio sensor (50) is mounted on a manifold (34) of exhaust pipes (32a and 32b) connected to the cylinders of an engine. The air-fuel ratio sensor (50) is located upstream of catalytic converters (38a and 38b) provided in the exhaust pipes (32a and 32b).

## Description

The present invention relates to a mounting structure of an air-fuel ratio sensor in a motorcycle, and more particularly to a mounting structure of an air-fuel ratio sensor on an exhaust pipe in a motorcycle.

An oxygen sensor is conventionally adopted in a motorcycle, so as to improve a catalytic efficiency. In a motorcycle having a multicylinder engine, such an oxygen sensor is mounted on a manifold of exhaust pipes at a position upstream of a catalyst for exhaust purification, e.g., a three-way catalyst and spaced apart from the engine on the rear lower side thereof. In a motorcycle having a single-cylinder engine, such an oxygen sensor is located in an empty space not interfering with the engine body, so as to improve the maintainability and protect the sensor.

As a technical idea related to this mounting structure, there has been proposed an invention entitled "Air-Fuel Ratio Control Device for Internal Combustion Engine" (Japanese Patent Laid-open No. Sho 59-74360, Patent Document 1). In Patent Document 1, a catalyst for exhaust purification is provided in an exhaust pipe of an internal combustion engine for a vehicle, and an exhaust gas sensor is mounted upstream of the catalyst. The composition ratio of an exhaust gas to be supplied to the catalyst is detected by the exhaust gas sensor, and the air-fuel ratio of an air-fuel mixture to be taken into the engine is controlled according to a detection signal output from the exhaust gas sensor. According to the description in Patent Document 1, feedback control of such an air-fuel ratio is performed by an air-fuel ratio control device known in the art so that the composition ratio of the exhaust gas becomes an optimum value allowing best purification of the exhaust gas by the catalyst. Further, Patent Document 1 also discloses that an oxygen sensor for detecting the concentration of oxygen in an exhaust gas is generally used as the exhaust gas sensor.

Further, according to the description in an invention entitled "Exhaust Gas Sensor Device in Motorcycle" (Japanese Patent Laid-open No. 2000-335467, Patent Document 2), an exhaust gas sensor for detecting the concentration of oxygen or the like in an exhaust gas discharged from an engine mounted on a motorcycle may be mounted on an upper wall of an exhaust pipe at a position on the front side of a right projecting portion of a crankcase and on the outer side of a right side surface of a cylinder block.

[Patent Document 1]
Japanese Patent Laid-open No. Sho 59-74360
[Patent Document 2]
Japanese Patent Laid-open No. 2000-335467

In both of Patent Documents 1 and 2, an oxygen sensor is used as the exhaust gas sensor. This kind of oxygen sensor determines whether the air-fuel ratio is rich or lean with respect to a stoichiometric air-fuel ratio, but it is not suitable for linear detection of the oxygen concentration.

Also in a motorcycle, it is desirable to detect the air-fuel ratio in a wide region by using an air-fuel ratio sensor in place of the oxygen sensor mentioned above. In other words, the oxygen sensor merely detects the presence or absence of oxygen in an exhaust gas as mentioned above, whereas the air-fuel ratio sensor can linearly detect the oxygen concentration in an exhaust gas over a wide range by using an element whose output voltage changes in proportion to the oxygen concentration. However, since the air-fuel ratio sensor detects the oxygen concentration over a wide range rather than in a narrow region near the stoichiometric air-fuel ratio as mentioned above, there is a case that the detection accuracy of the air-fuel ratio sensor may be largely affected by the location of the air-fuel ratio sensor.

It is accordingly an object of the present invention to provide a mounting structure of an air-fuel ratio sensor in a motorcycle wherein the concentration of oxygen or the like can be detected by the air-fuel ratio sensor efficiently and accurately.

According to the present invention, there is provided a mounting structure of an air-fuel ratio sensor for detecting the concentration of oxygen in an exhaust gas in a motorcycle having a multicylinder engine, wherein the air-fuel ratio sensor is mounted on a manifold of exhaust pipes connected to the cylinders of the engine.

With this arrangement, the concentration of oxygen in the exhaust gas passed through the plural exhaust pipes can be detected by a minimum number of air-fuel ratio sensors. Preferably, the air-fuel ratio sensor is located upstream of catalytic converters provided in the exhaust pipes, thereby allowing air-fuel ratio control such that the combustion efficiency can be greatly improved and the function of the catalytic converters can be exhibited. The air-fuel ratio sensor may be mounted on an inclined surface of the manifold so as to be inclined rearward of the motorcycle. With this arrangement, the amount of inward projection of the air-fuel ratio sensor can be reduced to thereby provide a space.

According to the present invention, the concentration of oxygen in the exhaust gas can be detected efficiently and accurately by using a necessary and sufficient number of air-fuel ratio sensors in accordance with various types of engines, the number of cylinders, the number of exhaust pipes, etc. Moreover, it is possible to perform air-fuel ratio control such that the function of the catalytic converters can be sufficiently exhibited.
FIG. 1 is a schematic side view of a motorcycle having a two-cylinder engine in the condition where an air-fuel ratio sensor according to a first preferred embodiment of the present invention is mounted on a manifold of two exhaust pipes.
FIG. 2 is a schematic plan view showing the layout of the manifold and the air-fuel ratio sensor shown in FIG. 1.
FIG. 3 is a vertical sectional view showing the mounted condition of the air-fuel ratio sensor shown in FIG. 1.
FIG. 4 is a perspective view of a motorcycle having a four-cylinder engine in the condition where an air-fuel ratio sensor according to a second preferred embodiment of the present invention is mounted on a manifold of four exhaust pipes.
FIG. 5 is a schematic plan view showing the manifold and the air-fuel ratio sensor shown in FIG. 4.
FIG. 6 is a schematic plan view showing a third preferred embodiment of the present invention wherein first and second air-fuel ratio sensors are mounted on first and second manifolds of four exhaust pipes in a four-cylinder engine, respectively.
FIG. 7 is a schematic plan view showing a fourth preferred embodiment of the present invention wherein a first air-fuel ratio sensor is mounted on a first manifold of three exhaust pipes connected to the three cylinders of a horizontally opposed six-cylinder engine on one side thereof, and a second air-fuel ratio sensor is mounted on a second manifold of three exhaust pipes connected to the remaining three cylinders of the engine on the other side thereof.

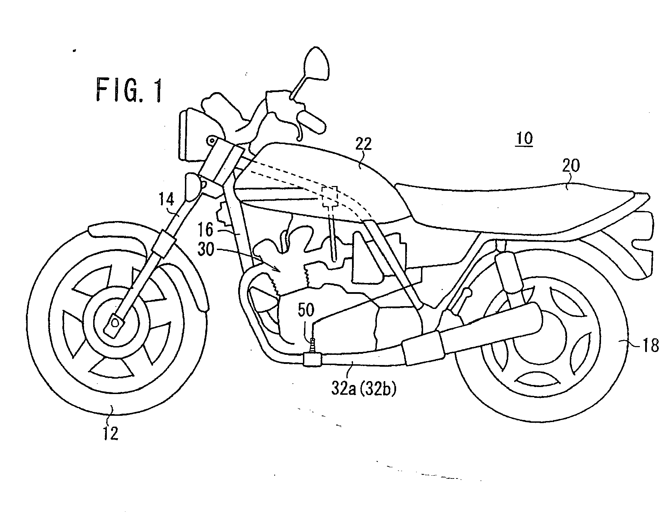

Some preferred embodiments of the mounting structure of the air-fuel ratio sensor in the motorcycle according to the present invention will now be described in detail with reference to FIGS. 1 to 7.

FIG. 1 is a schematic side view of a motorcycle 10 in the condition where an air-fuel ratio sensor according to a first preferred embodiment of the present invention is mounted on a manifold of two exhaust pipes. The motorcycle 10 itself has a known structure. More specifically, a front wheel 12 is supported to a front fork 14. The front fork 14 is connected to a frame 16. A rear wheel 18 is provided at a rear portion of the frame 16. A seat 20 is fixed to the frame 16 at a position above the rear wheel 18. A fuel tank 22 is also fixed to the frame 16. A two-cylinder engine 30 is provided below the fuel tank 22. A first exhaust pipe 32a and a second exhaust pipe 32b extend from the two cylinders of the engine 30 toward the rear side of the vehicle, respectively.

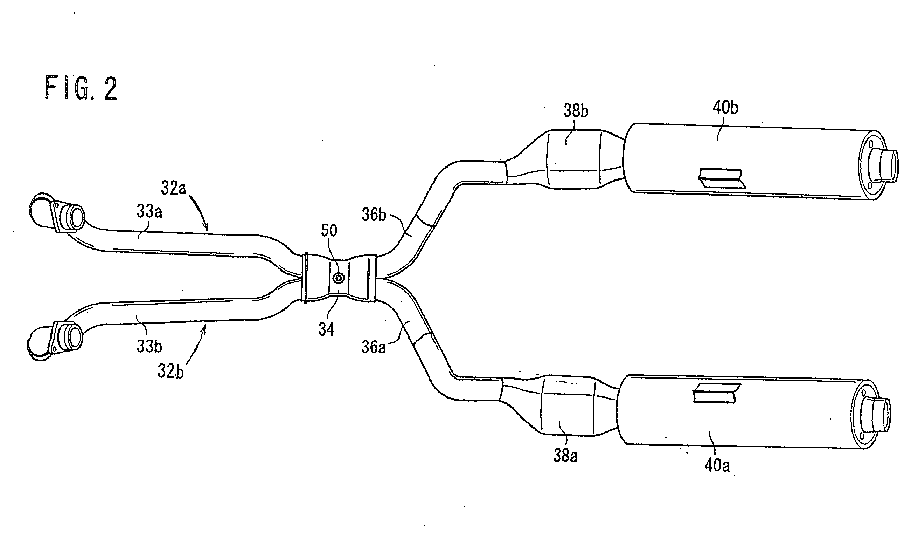

FIG. 2 is a schematic plan view showing the structure of the first and second exhaust pipes 32a and 32b. The first exhaust pipe 32a includes an upstream pipe member 33a and a downstream pipe member 36a. Similarly, the second exhaust pipe 32b includes an upstream pipe member 33b and a downstream pipe member 36b. The upstream pipe members 33a and 33b extend from the two cylinders of the engine 30 and are once joined to each other to form a manifold 34. The manifold 34 is branched at its downstream end to form the downstream pipe members 36a and 36b. The downstream pipe members 36a and 36b are provided with a first catalytic converter 38a and a second catalytic converter 38b, respectively. The first catalytic converter 38a is connected at its downstream end to a first muffler 40a, and the second catalytic converter 38b is connected at its downstream end to a second muffler 40b. Each of the first and second catalytic converters 38a and 38b includes a three-way catalyst (not shown).

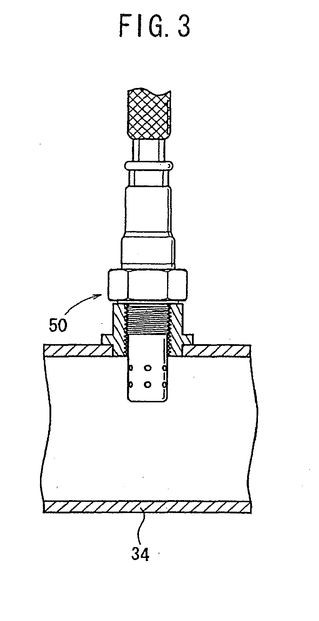

As shown in FIGS. 2 and 3, an air-fuel ratio sensor 50 is mounted on the manifold 34 at a substantially central position in the longitudinal direction of the manifold 34 in such a manner as to be pointed in a direction perpendicular to a road surface (not shown).

The exhaust gas discharged from the cylinders of the engine 30 is introduced into the upstream pipe member 33a of the first exhaust pipe 32a and the upstream pipe member 33b of the second exhaust pipe 32b. The exhaust gas passed through these upstream pipe members 33a and 33b is introduced into the manifold 34, and the concentration of oxygen in the exhaust gas is detected by the air-fuel ratio sensor 50 mounted on the manifold 34. The oxygen concentration detected above is converted into an electrical signal, which is in turn supplied to a control unit (not shown) to control the air-fuel ratio in the engine 30.

The exhaust gas passed through the manifold 34 is introduced into the first and second catalytic converters 38a and 38b to perform the oxidation of hydrocarbons HC and carbon monoxide CO and the reduction of nitrogen oxides NOx. Thereafter, the exhaust gas is discharged through the mufflers 40a and 40b to the outside of the vehicle.

Accordingly, it is possible to perform air-fuel ratio control allowing a high combustion efficiency and a sufficient catalytic function in the first and second catalytic converters 38a and 38b.

In this preferred embodiment, the air-fuel ratio sensor 50 is mounted on the manifold 34 of the two exhaust pipes 32a and 32b downstream of the two-cylinder engine 30 at a position upstream of the first and second catalytic converters 38a and 38b. Accordingly, an installation space for the air-fuel ratio sensor 50 is not so large, and the air-fuel ratio can be controlled by a minimum number of air-fuel ratio sensors, that is, by the single air-fuel ratio sensor 50 irrespective of the number of cylinders. Further, since the air-fuel ratio sensor 50 is located upstream of the first and second catalytic converters 38a and 38b, an efficient air-fuel ratio can be given to the three-way catalyst.

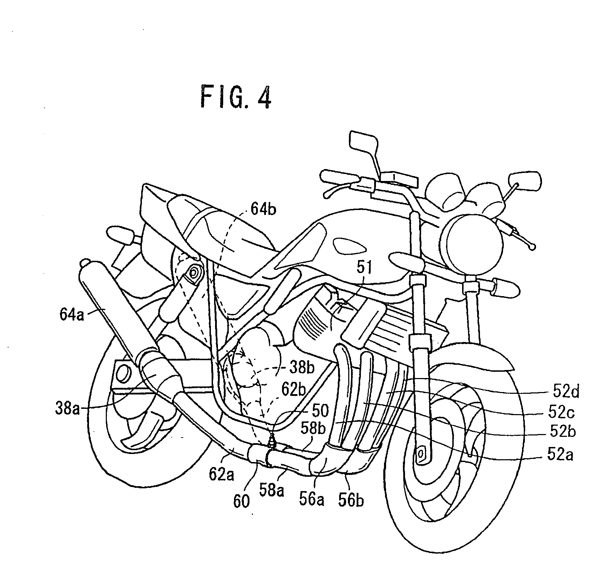

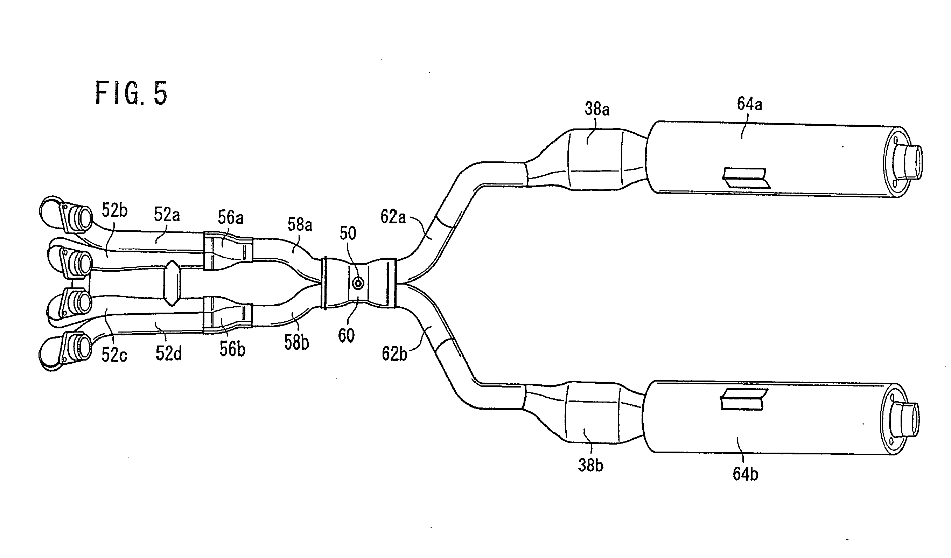

FIGS. 4 and 5 show a second preferred embodiment of the present invention. In FIGS. 4 and 5, the same reference numerals as those shown in FIGS. 1 to 3 denote the same parts, and the detailed description thereof will be omitted herein. The same applies to the other preferred embodiments of the present invention.

The second preferred embodiment relates to a motorcycle having a four-cylinder engine 51. A first exhaust pipe 52a is connected to the first cylinder of the engine 51, and a second exhaust pipe 52b is connected to the second cylinder of the engine 51. The first exhaust pipe 52a and the second exhaust pipe 52b are connected through a first connecting member 56a to a first manifold 58a. Similarly, a third exhaust pipe 52c is connected to the third cylinder of the engine 51, and a fourth exhaust pipe 52d is connected to the fourth cylinder of the engine 51. The third exhaust pipe 52c and the fourth exhaust pipe 52d are connected through a second connecting member 56b to a second manifold 58b.

The first manifold 58a and the second manifold 58b are joined to each other at.a third manifold 60. The third manifold 60 is branched at its downstream end to form a fifth exhaust pipe 62a and a sixth exhaust pipe 62b. The fifth exhaust pipe 62a and the sixth exhaust pipe 62b are connected at their downstream ends to a first catalytic converter 38a and a second catalytic converter 38b, respectively.

In FIGS. 4 and 5, reference numerals 64a and 64b denote first and second mufflers, respectively.

In the second preferred embodiment, an air-fuel ratio sensor 50 is mounted on the third manifold 60. The exhaust gas discharged from the first and second exhaust pipes 52a and 52b is passed through the first connecting member 56a and the first manifold 58a to reach the third manifold 60. Similarly, the exhaust gas discharged from the third and fourth exhaust pipes 52c and 52d is passed through the second connecting member 56b and the second manifold 58b to reach the third manifold 60.

Then, the concentration of oxygen in the exhaust gas is detected by the air-fuel ratio sensor 50 mounted on the third manifold 60. As in the first preferred embodiment, the oxygen concentration detected above is converted into an electrical signal to control the air-fuel ratio in the four-cylinder engine 51.

Also in the second preferred embodiment shown in FIGS. 4 and 5, the exhaust gas discharged from the four cylinders of the engine 51 is detected by the single air-fuel ratio sensor 50 to control the air-fuel ratio in the engine 51.

Thus, the air-fuel ratio sensor 50 is efficiently located with respect to the four cylinders to thereby allow the air-fuel ratio control with a minimum number of sensors. Furthermore, since the air-fuel ratio sensor 50 is located upstream of the first and second catalytic converters 38a and 38b, an efficient air-fuel ratio can be given to the three-way catalyst.

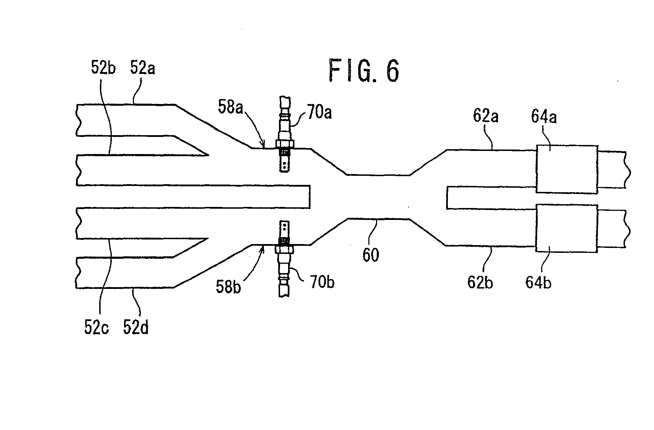

FIG. 6 shows a third preferred embodiment of the present invention. FIG. 6 is a schematic illustration of the layout of exhaust pipes, catalytic converters, and air-fuel ratio sensors on the basis of the configuration shown in FIG. 5.

That is, the third preferred embodiment shown in FIG. 6 is different from the second preferred embodiment shown in FIG. 5 in only the point that a first air-fuel ratio sensor 70a is mounted on the first manifold 58a and a second air-fuel ratio sensor 70b is mounted on the second manifold 58b. Accordingly, the first air-fuel ratio sensor 70a is used to detect the concentration of oxygen in the exhaust gas passed through the first and second exhaust pipes 52a and 52b respectively connected to the first and second cylinders of a four-cylinder engine. Similarly, the second air-fuel ratio sensor 70b is used to detect the concentration of oxygen in the exhaust gas passed through the third and fourth exhaust pipes 52c and 52d respectively connected to the third and fourth cylinders of the four-cylinder engine.

According to this preferred embodiment, the oxygen concentration in the first and second exhaust pipes 52a and 52b can be detected by the first air-fuel ratio sensor 70a, and the oxygen concentration in the third and fourth exhaust pipes 52c and 52d can be detected by the second air-fuel ratio sensor 70b. Accordingly, the air-fuel ratio in each cylinder of the four-cylinder engine can be controlled more accurately.

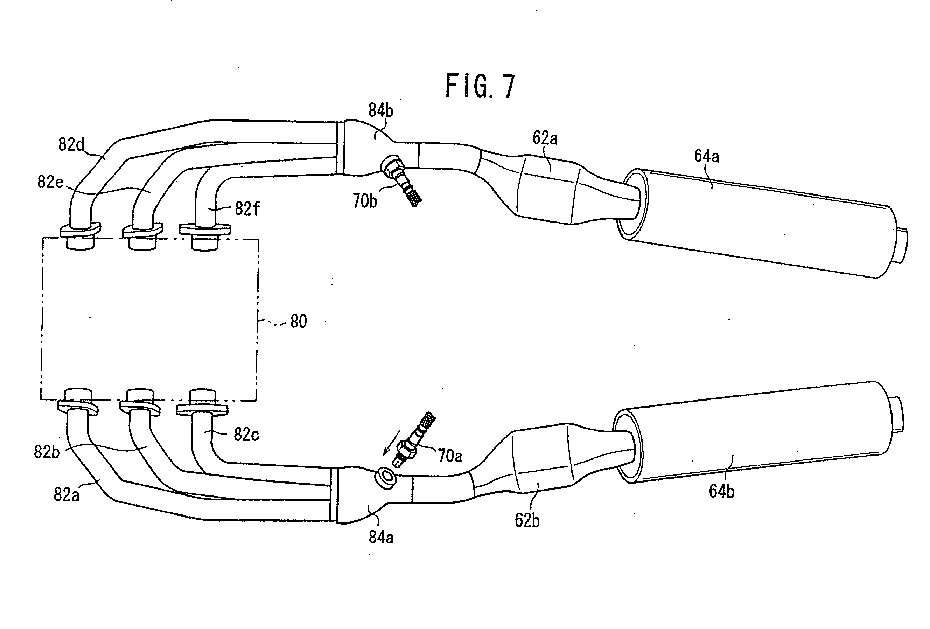

FIG. 7 shows a fourth preferred embodiment of the present invention. In this preferred embodiment, a horizontally opposed six-cylinder engine 80 is used and two air-fuel ratio sensors 70a and 70b are provided to control the air-fuel ratio in the engine 80.

As shown in FIG. 7, a first exhaust pipe 82a, a second exhaust pipe 82b, and a third exhaust pipe 82c on one side of the engine 80 are joined together at a first manifold 84a. Similarly, a fourth exhaust pipe 82d, a fifth exhaust pipe 82e, and a sixth exhaust pipe 82f on the other side of the engine 80 are joined together at a second manifold 84b.

The first air-fuel ratio sensor 70a is mounted on the inner inclined surface of the first manifold 84a so as to be inclined rearward of the vehicle. Similarly, the second air-fuel ratio sensor 70b is mounted on the inner inclined surface of the second manifold 84b so as to be inclined rearward of the vehicle. With this arrangement, the concentration of oxygen in the exhaust gas passed through the first, second, and third exhaust pipes 82a, 82b, and 82c can be detected by the first air-fuel ratio sensor 70a mounted on the first manifold 84a, and the concentration of oxygen in the exhaust gas passed through the fourth, fifth, and sixth exhaust pipes 82d, 82e, and 82f can be detected by the second air-fuel ratio sensor 70b mounted on the second manifold 84b.

Also in this preferred embodiment, the concentration of oxygen in the exhaust gas passed through a plurality of exhaust pipes can be detected by a minimum number of air-fuel ratio sensors. Particularly in the case of the horizontally opposed six-cylinder engine 80, the concentration of oxygen in the exhaust gas discharged from the first to third cylinders of the engine 80 on one side thereof can be detected by the single air-fuel ratio sensor 70a, and the concentration of oxygen in the exhaust gas discharged from the fourth to sixth cylinders of the engine 80 on the other side thereof can be detected by the second air-fuel ratio sensor 70b. Thus, the oxygen concentrations in the exhaust gases discharged from the cylinders on one side of the engine 80 and from the cylinders on the other side of the engine 80 can be individually detected, thereby attaining higher-precision air-fuel ratio control. Further, since the first and second air-fuel ratio sensors 70a and 70b are mounted so as to be inclined rearward of the vehicle, the amount of inward projection of each sensor can be reduced.

As apparent from the above-mentioned preferred embodiments, the present invention is applicable to various types of multicylinder engines such as a straight engine, horizontally opposed engine, and V-engine.

- 10:: motorcycle
- 12:: front wheel
- 14:: front fork
- 16:: frame
- 18:: rear wheel
- 20:: seat
- 22:: fuel tank
- 30, 80:: engine
- 32a, 32b, 33a, 33b, 36a, 36b, 52a - 52d, 62a, 62b, 82a - 82f:: exhaust pipe
- 34, 58a, 58b, 60, 84a, 84b:: manifold
- 38a, 38b:: catalytic converter
- 40a, 40b, 64a, 64b:: muffler
- 50, 70a, 70b:: air-fuel ratio sensor 56a, 56b: connecting member

## Claims

1. A mounting structure for an air-fuel ratio sensor (50) for detecting the concentration of oxygen in an exhaust gas in a motorcycle (10) having a multicylinder engine, wherein said air-fuel ratio sensor (50) is mounted on a manifold of exhaust pipes connected to the cylinders of said engine.

2. The mounting structure according to claim 1, wherein said air-fuel ratio sensor (50) is located upstream of catalytic converters (38a, 38b) provided in said exhaust pipes.

3. The mounting structure according to claim 1 or 2, wherein said air-fuel ratio sensor (50) is mounted on an inclined surface of said manifold so as to be inclined rearward of said motorcycle (10).

## Amended claims

### Amended claims in accordance with Rule 86(2) EPC.

**1.** A mounting structure for an air-fuel ratio sensor (70a, 70b) for detecting the concentration of oxygen in an exhaust gas in a motorcycle (10) having a multicylinder engine,
wherein said air-fuel ration sensor (70a, 70b) is mounted on an inclined surface of a manifold (84a, 84b) of exhaust pipes connected to the cylinders of said engine,
**characterised in that**
the sensor (70a, 70b) is mounted so as to be inclined backwards with respect to the driving direction of the motorcycle.

**2.** The mounting structure according to claim 1,
wherein said air-fuel ration sensor (70a, 70b) is located upstream of catalytic converters (38a, 38b) provided in said exhaust pipes.
